Europäisches Patentamt

European Patent Office

Office européen des brevets

(11) Numéro de publication: **0 450 994 B1**

(12) **FASCICULE DE BREVET EUROPEEN**

(45) Date de publication du fascicule du brevet: **25.10.95**

(51) Int. Cl.⁶: **C08L 27/16**, C08L 33/10, C08L 51/00, C08L 51/04, C08J 7/04

(21) Numéro de dépôt: **91400460.1**

(22) Date de dépôt: **20.02.91**

(54) **Composition coextrudable avec le polyfluorure de vinylidène.**

(30) Priorité: **02.03.90 FR 9002674**

(43) Date de publication de la demande: **09.10.91 Bulletin 91/41**

(45) Mention de la délivrance du brevet: **25.10.95 Bulletin 95/43**

(84) Etats contractants désignés: **AT BE CH DE DK ES FR GB GR IT LI LU NL SE**

(56) Documents cités: **EP-A- 0 306 385** **DE-A- 2 166 470**

(73) Titulaire: **ELF ATOCHEM S.A. 4 & 8, Cours Michelet La Défense 10 F-92800 Puteaux (FR)**

(72) Inventeur: **Strassel, Albert 30, Rue Pasteur F-69600 Oullins (FR)** Inventeur: **Duperray, Gilbert Le Hameau F-69380 Civrieux d'Azergues (FR)** Inventeur: **Rocher, Philippe 933, Route de Givors Grandval, F-69390 Vernaison (FR)**

(74) Mandataire: **Foiret, Claude et al ELF ATOCHEM S.A. Département Propriété Industrielle La Défense 10 - Cedex 42 F-92091 Paris-La-Défense (FR)**

**Description**

La présente invention concerne une composition à base de polyfluorure de vinylidène (PVDF), de polyméthacrylate d'alcoyle et d'élastomère acrylique et/ou méthacrylique, coextrudable avec le PVDF permettant l'adhérence de ce dernier à une résine polymérique qui lui est incompatible. L'invention concerne également les produits de coextrusion de cette composition avec le PVDF ainsi que les composites directement obtenus par coextrusion de PVDF et de résine thermoplastique incompatible avec le PVDF, la composition servant d'intermédiaire d'adhérence.

P.D. FRAYER dans 34th Annual Tech. Conference SPE (1976) Vol. 22 pages 89-90 signale que deux polymères incompatibles peuvent adhérer l'un à l'autre lorsqu'on les coextrude avec un copolymère intermédiaire compatible avec chacun d'eux. Si FRAYER donne l'idée de la coextrusion pour faire adhérer des polymères non compatibles entre eux, il ne définit pas le copolymère adéquat permettant cette adhésion. Chacun sait que les résines fluorées, et plus particulièrement le PVDF, ne sont pas particulièrement compatibles avec les autres résines thermoplastiques et qu'il ne suffit pas d'écrire que la coextrusion d'une résine fluorée avec un tiers composant compatible permet une adhérence convenable avec ces résines thermoplastiques. Dans le FR 2 436 676 est décrit un procédé de fabrication d'un matériau composite PVDF-polymère thermoplastique non compatible avec le PVDF consistant en une coextrusion des deux composants avec en intermédiaire un polyméthacrylate d'alcoyle ou un mélange d'au moins 75 % en poids de polyméthacrylate d'alcoyle avec un autre polymère indéfini. Il a été constaté que, si cette technique permet effectivement d'obtenir grâce au PVDF une bonne protection de surface des plaques de résines thermoplastiques, leur résistance au choc et leur tenue dans le temps à l'humidité est médiocre.

A titre d'exemple, une plaque de résine acrylonitrile-butadiène-styrène revêtue d'un film de PVDF obtenue selon la technique de l'exemple 1 du FR 2 436 676 avec un film de polyméthacrylate de méthyle en intermédiaire présente initialement une excellente adhésion intercouches supérieure à 2500 N/m. Cette adhésion devient mauvaise : 480 N/m après une exposition de 400 heures à 75°C en atmosphère saturée d'eau. En outre la tenue au choc n'est que de l'ordre de 300 à 380 Kj/m$^2$. Bien que le polyméthacrylate de méthyle soit connu pour sa compatibilité avec le PVDF et les autres polymères, il se révèle que cette compatibilité selon FRAYER, si elle est nécessaire, est insuffisante pour définir un bon moyen d'adhésion.

*Dans EP−A−0306385 on a décrit une composition comprenant (A) au moins un polymère à base de méthacrylate de méthyle et (B) au moins un latex élastomère, caractérisée en ce qu'elle comprend en outre (C) au moins un polymère à base de fluorure de vinylidène, en ce que le rapport en poids (B)/(A) est compris entre 0,1 et 0,5 et en ce que le rapport en poids (C)/(A) est compris entre 0,1 et 0,45. Les compositions sont destinées à la réalisation d'articles façonnés, notamment de plaques présentant une haute résistance au choc et une bonne transparence.*

La composition selon l'invention coextrudable avec le PVDF permet de réaliser des matériaux composites avec des résines polymériques non compatibles avec le PVDF possédant une bonne tenue au choc et une excellente tenue à l'humidité dans leur intercouche. Lors de la coextrusion avec le PVDF la composition présente en plus l'intérêt de se répartir et de s'étaler très facilement sur toute la surface du PVDF ce qui influence énormément l'aspect.

La composition coextrudable avec le PVDF à base de polyméthacrylate d'alcoyle et de PVDF est caractérisée en ce qu'elle est constituée de :
- 27 à 50 parties en poids de polyméthacrylate d'alcoyle
- 73 à 50 parties en poids d'un additif lui-même constitué pour 100 parties en poids d'additif de
  - 35 à 50 parties en poids de PVDF
  - 65 à 50 parties en poids d'élastomère acrylique ou méthacrylique.

Bien que le polyméthacrylate d'alcoyle le plus simple à utiliser dans la composition soit le polyméthacrylate de méthyle, tous les polyméthacrylate d'alcoyle contenant de 1 à 22 atomes de carbone conviennent. Il est également entendu sous la dénomination polyméthacrylate d'alcoyle, les copolymères non élastomères présentant dans la chaine polymérique au moins 30 % en poids de reste méthacrylique. Peuvent également être associés au monomère méthacrylique au moins un monomère éthyléniquement insaturé tels que le styrène, l'alphaméthylstyrène, l'acrylonitrile, le méthacrylonitrile, l'acide acrylique ou acide méthacrylique.

De façon connue d'excellents résultats sont obtenus avec du polyméthacrylate d'alcoyle dont les viscosités apparentes sont de préférence comprises entre les limites indiquées pour un gradient de vitesse donnée ci-après et mesurées à 200°C. Ces valeurs ne sont toutefois pas limitatives, en raison de la possibilité dont dispose l'homme de l'art de modifier les viscosités en fonction de la température d'extrusion.

| Gradient de Vitesse sec$^{-1}$ | Valeur des viscosités apparentes en Pa.s | |
| --- | --- | --- |
| | minimum | maximum |
| 3,54 | 4 000 | 50 000 |
| 11,81 | 2 000 | 28 000 |
| 35,4 | 1 125 | 15 000 |
| 118 | 551,50 | 8 000 |
| 354 | 300 | 5 000 |
| 1 181 | 150 | 2 000 |

Le PVDF entrant dans la composition coextrudable est généralement un homopolymère, mais sous cette dénomination PVDF sont également compris les copolymères contenant au moins 70 % en poids de restes de molécules de fluorure de vinylidène. De façon connue, il est généralement admis que tous les PVDF donnent des résultats satisfaisants. Les meilleurs résultats sont obtenus avec un PVDF se trouvant de préférence dans une gamme de viscosité apparente à 200°C telle qu'il présente au moins pour deux gradients de vitesse du tableau ci-après des viscosités apparentes respectivement incluses entre les deux viscosités apparentes extrêmes indiquées.

| Gradient de Vitesse sec$^{-1}$ | Valeur des viscosités apparentes en Pa.s | |
| --- | --- | --- |
| | minimum | maximum |
| 3,54 | 3 000 | 20 000 |
| 11,81 | 1 800 | 9 300 |
| 35,4 | 1 100 | 4 700 |
| 118 | 650 | 2 100 |
| 354 | 390 | 1 000 |
| 1 181 | 230 | 450 |

Les viscosités apparentes dont il est fait état dans cette invention sont mesurées de façon connue au moyen d'un rhéomètre capillaire en tenant compte de la correction de RABINOWITCH appliquée aux liquides non newtoniens.

L'élastomère acrylique ou méthacrylique, troisième composant de la composition est soit un élastomère acrylique greffé ou méthacrylique greffé, étant entendu que sous ces dénominations sont également compris leurs mélanges ou leurs copolymères acrylique-méthacrylique, soit un élastomère à base de diène conjugué greffé par un composé acrylique ou méthacrylique. L'élastomère acrylique ou méthacrylique greffé, pour présenter les caractéristiques élastomériques convenables, possède une température de transition vitreuse inférieure à -10°C. L'élastomère à base de diène conjugué est choisi parmi les copolymères greffés dérivés d'un diène conjugué et d'un méthacrylate d'alcoyle et/ou d'un acrylate

EP 0 450 994 B1

d'alcoyle.

Parmi les diènes conjugués entrant dans la composition de l'élastomère le butadiène est celui le plus souvent choisi. Le diène se présente le plus souvent sous forme de copolymère avec le styrène tel que le copolymère butadiène styrène. Parmi les élastomères thermoplastiques particulièrement recommandés peuvent être cités les esters alkylméthacrylique-butadiène-styrène (MBS), et les esters alkylacrylique-butadiène-styrène. Parmi les esters alkylméthacryliques, on peut citer en particulier les esters méthylméthacrylique-butadiène-styrène, les esters éthylméthacrylique-butadiène-styrène, les esters butylméthacrylique-butadiène-styrène, les esters laurylméthacrylique-butadiène-styrène. S'agissant des esters alkylacrylique-butadiène-styrène, on peut citer ceux dérivés des acrylates de méthyle, d'éthyl, de butyle ou d'éthyl-2 hexyle. Peuvent également être cités comme élastomères thermoplastiques, convenant dans la composition, les copolymères greffés comprenant un tronc consistant en copolymère statistique d'un diène conjugué et d'un acrylate d'alcoyle généralement en $C_1$-$C_{12}$ sur lequel sont greffés des chaines d'un copolymère de méthacrylate d'alcoyle généralement en $C_1$-$C_8$ et d'acrylate d'alcoyle en $C_1$-$C_8$, le copolymère tronc pouvant en outre renfermer des motifs dérivés d'un agent réticulant renfermant au moins deux groupements

$$CH_2 = C \diagup_{\diagdown} ,$$

lesdits copolymères ayant été décrits par exemple dans les brevets français FR-A-2 551 446 et FR-A-2 551 447.

Parmi les élastomères acryliques greffés ou méthacryliques greffés on peut citer les polyacrylates d'alcoyle ou polyméthacrylates d'alcoyle ou leurs copolymères greffés par un méthacrylate d'alcoyle ou un acrylate d'alcoyle. A titre d'exemple on peut citer les copolymères greffés comprenant un tronc consistant en polymère ou copolymère d'acrylate d'alcoyle ou méthacrylate d'alcoyle, de préférence en $C_1$-$C_8$,sur lequel sont greffés des chaines d'un polymère ou d'un copolymère d'acrylate d'alcoyle ou de méthacrylate d'alcoyle généralement différent de celui du tronc et de préférence en $C_1$-$C_8$. Parmi ces élastomères peut être cité le polyacrylate butyle greffé polyméthacrylate de méthyle.

Les élastomères thermoplastiques utilisés dans l'invention peuvent être définis comme des polymères ou copolymères qui, naturellement, sans apport de plastifiant, possèdent un comportement caoutchoutique sous faible déformation. Ce comportement caoutchoutique peut se caractériser par un allongement au seuil d'écoulement supérieur à 20 %. L'allongement au seuil d'écoulement par opposition à l'allongement à la rupture est défini dans les normes ASTM D638-86 et D-638M-84. Ces élastomères thermoplastiques possèdent généralement un module d'élasticité en flexion inférieur ou égal à 800 MPa à la température ambiante.

Cette composition coextrudable est préparée de façon classique par exemple par malaxage à chaud des trois composants en proportions choisies dans un mélangeur à vis suivi d'une granulation.

Comme déjà signalé, cette composition est appliquée sur le PVDF à chaud par coextrusion. Le PVDF correspond à la définition donnée précédemment. Il peut être identique ou différent de celui utilisé dans la composition. Cette coextrusion s'effectue au moyen d'appareillage et de techniques classiques et connues. L'appareillage nécessaire pour coextruder le PVDF et la composition est constitué d'extrudeuses, de filière et de préférence d'un répartiteur de flux. L'épaisseur de chaque couche est réglée par le débit de chacune des extrudeuses.

Pour le besoin de l'invention, la température de la filière est comprise entre 180 et 280°C, cette température dépendant des matériaux coextrudés. Les températures des extrudeuses sont celles habituellement prévues dans le cas de la simple extrusion de chacun des polymères.

Afin que la cohésion finale entre chacun des composants soit bien assurée, il est recommandé de procéder à leur coextrusion de façon telle que les matières sortant des extrudeuses soient réunies au plus tard au niveau des lèvres de la filière. Dans certains cas, la cohésion obtenue peut laisser à désirer c'est pourquoi il est préférable que les flux de chacun des composants en sortie d'extrudeuse cheminent ensemble et en contact sur une certaine longueur avant d'atteindre les lèvres de la filière. Dans ce dernier cas, à la place d'une filière à plusieurs canaux, on interpose un répartiteur de flux entre la sortie des extrudeuses et une filière à canal unique.

L'épaisseur de la couche de composition selon l'invention sur le PVDF est habituellement de 10 à 300 $\mu$m (microns). Il n'est en général pas judicieux de former des couches de plus forte épaisseur en raison de l'importance que prendraient les différents éléments de la composition dans les propriétés mécaniques de l'ensemble.

4

L'épaisseur de la couche de PVDF est en principe sans importance, mais, ce PVDF étant appelé à servir essentiellement de couche de protection d'une surface de résine thermoplastique non compatible, il est préférable pour des raisons économiques de réaliser avec la composition un matériau composite dont l'épaisseur de la couche de PVDF est comprise entre 10 et 150 $\mu$m (microns).

Le composite coextrudé PVDF -composition définie précédemment-est utilisé pour protéger des surfaces de polymères thermoplastiques non compatibles avec le PVDF formant ainsi un matériau composite PVDF-polymère thermoplastique non compatible avec le PVDF. La réalisation de cette protection peut se faire par plaxage à chaud sur un objet en polymère thermoplastique. Elle peut également se faire par injection d'un polymère thermoplastique non compatible avec le PVDF dans un moule où a été placé le composite, face PVDF vis à vis de la surface du moule.

Il est également possible de mouler une résine thermodurcissable non compatible avec le PVDF dans un moule où a été placé le composite face PVDF vis à vis de la surface du moule ou encore de fixer à chaud par plaxage un polymère thermodurcissable sur un PVDF traité selon l'invention.

Si ce n'est l'ajout avec l'adaptation qu'il entraîne, d'une extrudeuse supplémentaire pour le polymère thermoplastique non compatible avec le PVDF, toutes les autres conditions telles que celles d'appareillage et de fabrication précédemment décrites restant inchangées, il est possible et même souhaitable pour la fabrication d'objets coextrudés tels que plaques, tubes, profilés, de coextruder directement le PVDF et le polymère thermoplastique non compatible avec comme liant d'adhésion la composition coextrudable de l'invention. Selon cette technique on obtient directement par coextrusion un matériau composite PVDF-polymère thermoplastique non compatible. En variante, toujours par coextrusion et au moyen d'au moins trois extrudeuses on obtient le matériau composite suivant à trois composants et à cinq couches : PVDF-composition coextrudable-polymère thermoplastique non compatible avec le PVDF-composition coextrudable-PVDF.

Le polymère thermoplastique non compatible avec le PVDF, où sous cette dénomination sont également compris les copolymères, peut être entre autres un polymère vinylique chloré comme un polychlorure de vinyle ou de vinylidène, un polymère styrénique comme un polystyrène ou un polystyrène choc, un polycarbonate, un polyuréthanne, un copolymère styrène-acrylonitrile-élastomère acrylique greffé, un copolymère acrylonitrile-butadiène-styrène. Parmi les polymères thermodurcissables non compatibles avec le PVDF peuvent être cités : les résines polyuréthannes et polyuréthannes-polyurées compacts et expansés, les résines polyesters, époxydes, phénoliques ainsi que les caoutchoucs vulcanisables. L'épaisseur de la couche de ce polymère thermoplastique peut être quelconque et dépend de l'épaisseur de l'objet final que l'on souhaite réaliser. De façon commune cette épaisseur peut varier de quelques dizaines de microns à quelques dizaines de millimètres lorsqu'il s'agit par exemple de planches ou d'objets massifs.

Les exemples suivants illustrent l'invention sans toutefois la limiter.

Les essais de résilience sont effectués selon-la norme DIN 53435.

Les essais d'adhésion sont effectués sur des éprouvettes de 25 mm x 180 mm. Le film est soulevé du substrat, si cela est possible, et chaque élément est serré entre les mors d'un dynamomètre. La vitesse d'étirage est de 250 mm/minute. L'énergie calculée

$$W = \frac{\underline{\text{Résistance}}}{\text{largeur de front de pelage}}$$

est exprimée en Newton par mètre.

La résistance à l'humidité est mesurée en essai accéléré sur une plaque nouvellement fabriquée. La plaque est placée en atmosphère saturée d'eau pendant 400 heures à 75°C pour les essais des exemples 1 et 2 avant la mesure.

EXEMPLE 1

Pour fabriquer un composite acrylonitrile-butadiène-styrène (ABS)-PVDF on dispose de trois extrudeuses SMTP-KAUFMAN. La première, munie d'un système de dégazage, possède un diamètre de 120 mm et une longueur de vis égale à 33 fois son diamètre ; elle est utilisée pour extruder l'ABS. La deuxième, de diamètre 50 mm (super. 2 X 50), est utilisée pour la composition coextrudable. La troisième de diamètre 40 mm est utilisée pour le PVDF.

Ces trois extrudeuses alimentent un cylindre répartiteur de flux fixé lui-même à une filière plate ordinaire destinée à fabriquer une plaque d'environ 4 mm d'épaisseur et suivie d'une calandre et d'un train de tirage classique pour l'extrusion de plaques.

L'ABS utilisé est un ARADUR T 723 ® dans les essais 1 à 44, et 48 à 50

ou un CYCOLAC X 399 ® pour les essais 45 à 47, et 51 à 56.

La couche de PVDF finale sur le composite est d'environ 150 microns.

Le PVDF utilisé dans les compositions coextrudables est un :

FORAFLON 4000 ® dans les essais 1 à 41, 43 à 45, et 51 à 56

ou FORAFLON 5050 ® dans les essais 42, 46, et 48 à 50.

Le PMMA utilisé dans les compositions coextrudables est de l'ALTULITE ® 2654 pour les essais 1 à 44 et 48 à 56 ou du RESARIT ® KOX 125 pour les essais 45 à 47.

Les viscosités apparentes à 200°C des différents produits sont les suivantes :

| Gradient de Vitesse sec$^{-1}$ | 3,54/sec$^{-1}$ | 354/sec |
|---|---|---|
| ARADUR T 723 | 13 500 | 500 |
| CYCOLAC X 399 | 15 700 | 600 |
| FORAFLON 4000 | 10 000 | 700 |
| FORAFLON 5050 | 7 700 | 750 |
| ALTULITE 2654 | 6 900 | 500 |
| KOX 125 | 30 000 | 2 100 |

Les compositions coextrudables ont été obtenues par mélange des composants, après séchage en étuve sous vide pendant 1 heure à 70°C, dans un mélangeur du type TURBULA pendant 15 minutes. Le mélange est ensuite extrudé en joncs qui sont coupés en granulés.

Les formules des compositions se retrouvent avec les résultats dans le tableau présenté dans la suite.

Les températures de chauffe des extrudeuses s'étagent de 190 à 210°C pour l'ABS, de 170 à 240°C pour la composition coextrudable et de 180 à 220°C pour le PVDF. Le répartiteur de flux ainsi que la filière sont à 210°C. Le film est reçu entre les cylindres d'une calandre chauffée à 80°C. Le débit total est d'environ 300 kg/h. On règle les débits des trois extrudeuses de façon à obtenir finalement un composite comprenant l'ABS en 3 mm d'épaisseur, la composition coextrudable selon le tableau ci-après et le PVDF en 100 microns.

L'effet d'étalement de la compositon à la coextrusion sur le PVDF est primordial pour assurer l'aspect final du composite. Dans le tableau ci-après l'étalement est classé en excellent, moyen et mauvais. L'étalement excellent signifie qu'il se fait régulièrement sans vagues sur toute la surface ; dans ce cas le PVDF de surface est lisse et sans défaut d'aspect. L'étalement moyen signifie qu'il se fait sur toute la surface, mais des vagues apparaissent provoquant ainsi des irrégularités d'épaisseur de la composition ; dans ce cas la surface de PVDF n'est plus lisse ce qui provoque des défauts d'aspect de surface inacceptables. L'étalement mauvais signifie que la composition ne s'étale que sur une partie de la surface du PVDF ou du polymère non compatible dans le cas de sa coextrusion directe ; dans ce cas il y a non seulement des défauts d'aspect mais également des défauts d'adhérence.

Dans le tableau ci-après :

► les essais 1 et 2 montrent que l'absence d'élastomère dans la composition coextrudable ne peut permettre la réalisation de composite convenable,

► les essais 3 et 4 montrent que les caoutchoucs vulcanisés micronisés non thermoplastiques ne conviennent pas pour une composition coextrudable valable,

► les essais 5 et 6 montrent que les élastomères styrènebutadiène non acryliques ou méthacryliques ne conviennent pas pour une composition coextrudable valable,

► les essais 7 et 8 montrent que les élastomères copolymères blocs éther-ester ne conviennent pas pour une composition coextrudable valable,

▶ l'essai 9 montre qu'un élastomère éthylène-anhydride maléique-acrylate ne convient pas pour une composition coextrudable valable,

▶ l'essai 10 montre qu'un élastomère polyester à groupes carbonyles libres ne convient pas pour une composition coextrudable valable,

▶ les essais 11 et 12 montrent qu'un élastomère copolyamide ne convient pas pour une composition coextrudable valable,

▶ l'essai 13 montre que les élastomères acryliques ne conviennent pas quand la composition ne contient pas de PVDF,

▶ l'essai 14 montre qu'un élastomère acrylique sur base éthylène ne convient pas pour une composition coextrudable valable,

▶ l'essai 15 montre qu'un élastomère méthacrylate de méthyle-butylméthacrylate ne convient pas pour une composition coextrudable valable quand la composition ne contient pas de PVDF,

▶ les essais 16 à 21 montrent que les élastomères acryliques ou méthacryliques ne conviennent pas quand la composition ne contient pas de PVDF,

▶ l'essai 22 montre que les EPDM ne conviennent pas pour une composition coextrudable valable,

▶ les essais 23-24-25-26 montrent que les élastomères polyuréthannes ne conviennent pas pour une composition coextrudable valable,

▶ les essais 27-28-29-30 montrent que les élastomères éthylène-acétate de vinyle ne conviennent pas pour une composition coextrudable valable,

▶ l'essai 31 montre que les élastomères éthylène-CO-acétate de vinyle ne conviennent pas pour une composition coextrudable valable,

▶ l'essai 32 montre que les élastomères polyéthers bloc-amides ne conviennent pas pour une composition coextrudable valable,

▶ les essais 33-34-35-36-37 montrent que les résines et les élastomères acrylonitrile-butadiène-styrène (ABS) associés ou non au PVDF ne conviennent pas pour une composition coextrudable valable,

▶ l'essai 38 montre que les polyuréthannes thermoplastiques ne conviennent pas : hydrolyse avec perte d'adhésion à l'humidité,

▶ les essais 39 et 50 montrent qu'un MBS, utilisé selon la formulation de la composition, convient,

▶ l'essai 40 montre qu'un élastomère éthylène-anhydride maléique ne convient pas, même utilisé selon les caractéristiques de la composition,

▶ les essais 41 et 42 montrent que sans la présene d'élastomère dans la composition, on ne peut obtenir de bons résultats : mauvaise tenue au choc,

▶ les essais 43 à 46 conviennent et montrent l'intérêt des élastomères acryliques répondant aux définitions données,

▶ l'essai 47, le PMMA seul, ne convient pas,

▶ l'essai 48 montre l'intérêt de l'élastomère acrylique selon l'invention,

▶ l'essai 49 montre que le polyuréthanne ne convient pas : hydrolyse et perte d'adhésion

▶ les essais 51 et 52 selon l'invention donnent de bons résultats,

▶ les essais 53 et 56 ne correspondant pas aux intervalles de la formulation donnent de mauvais résultats,

| Essais | Composition coextrudable | | | | Epaisseur de couche de compo-sition μm | Resi-lience Kj/m² | Etalement 2 Excellent 1 Moyen 0 Mauvais | Adhesion à sec N/m | Adhesion en milieu humide N/m |
|---|---|---|---|---|---|---|---|---|---|
| | PPoids PMMA | P Poids PVDF | P Poids Elasto-mère | Elasto-mère | | | | | |
| 1 | 100 | - | - | - | 50 | 290 | 2 | > 2 500 | 200 |
| 2 | 70 | 30 | - | - | 75 | 450 | 2 | > 2 500 | 1 100 |
| 3 | 70 ou 50 | - | 30 ou 50 | Ultrafine ® R 20 Th | 75 | non me-surable | 0 | non mesuré | - |
| 4 | 70 ou 50 | - | 30 ou 50 | Butacryl ® HT 28 | 75 | - | 0 | - | - |
| 5 | 70 ou 50 | - | 30 ou 50 | Kraton ® FG 1901 X | 75 | - | 0 | - | - |
| 6 | 70 | - | 30 | Stereon ® | 75 | - | 0 | - | - |
| 7 | 50 | - | 50 | Hytrel ® 4056 | 75 | 700 | 1 | 650 | 100 |
| 8 | 50 | - | 50 | Hytrel ® 7246 | 75 | 650 | 1 | 650 | 100 |
| 9 | 70 ou 50 | - | 30 ou 50 | Lotader ® | 75 | 600 à 700 | 1 | 1 200 | 200 |
| 10 | 70 | - | 30 | Grilesta ® P 7305 | 75 | - | 0 | - | - |

| Essais | Composition coextrudable | | | | Epaisseur de couche de compo-sition µm | Resi-lience Kj/m² | Etalement 2 Excel-lent 1 Moyen O Mauvais | Adhesion à sec N/m | Adhesion en milieu humide N/m |
|--------|--------|--------|--------|--------|--------|--------|--------|--------|--------|
| | PPoids PMMA | P Poids PVDF | P Poids Elasto-mère | Elasto-mère | | | | | |
| 11 | 70 | - | 30 | Grilomelt® 648 G | 75 | - | 0 | - | - |
| 12 | 70 | - | 30 | Grilomelt® 574 G | 75 | - | 0 | - | - |
| 13 | 60 ou 50 | - | 40 ou 50 | Dura-strenght® D 2000 | 75 | 780 | 1 | 1 800 | 160 |
| 14 | 50 | - | 50 | Lupolen® A 2910 MX | 75 | - | 0 | - | - |
| 15 | 50 | - | 50 | Neocryl® B 725 | 75 | 350 | 1 | 1 900 | 250 |
| 16 | 50 | - | 50 | Paraloïd® KM 323 B | 75 | 750 | 1 | > 2 500 | 700 |
| 17 | 50 | - | 50 | Paraloïd® KM 653 | 75 | 720 | 1 | 2 200 | 450 |

| Essais | Composition coextrudable | | | | Epaisseur de couche de compo-sition μm | Resi-lience Kj/m² | Etalement 2 Excel-lent 1 Moyen 0 Mauvais | Adhesion à sec N/m | Adhesion en milieu humide N/m |
|---|---|---|---|---|---|---|---|---|---|
| | PPoids PMMA | P Poids PVDF | P Poids Elasto-mère | Elasto-mère | | | | | |
| 18 | 50 | – | 30-50 | Paraloïd ® 2300 | 75 | 720 | 1 | > 1 800 | 200 |
| 19 | 70-50 | – | 30-50 | Paraloïd ® EXL 2607 | 75 | 680 | 1 | > 2 500 | 150 |
| 20 | 50 | – | 50 | Metablen ® C 201 | 75 | 680 | 1 | > 2 500 | 120 |
| 21 | 50 | – | 50 | Cryolite ® 620 | 75 | 500 | 1 | 2 000 | 140 |
| 22 | 70 | – | 30 | EPDM | 75 | – | 0 | – | – |
| 23 | 70 | – | 30 | Estane ® 58300 | 75 | – | 0 | – | – |
| 24 | 50 | – | 50 | Desmopan ® 720 | 75 | – | 0 | – | – |
| 25 | 70 | – | 30 | Elastollan ® 80 A | 75 | – | 0 | – | – |

EP 0 450 994 B1

| Essais | Composition coextrudable | | | | Epaisseur de couche de compo-sition μm | Resi-lience Kj/m² | Etalement 2 Excel-lent 1 Moyen 0 Mauvais | Adhesion à sec N/m | Adhesion en milieu humide N/m |
|---|---|---|---|---|---|---|---|---|---|
| | PPoids PMMA | P Poids PVDF | P Poids Elasto-mère | Elasto-mère | | | | | |
| 26 | 50 | – | 50 | Elastollan ® P 8513 | 75 | – | 0 | – | – |
| 27 | 70 | – | 30 | Orevac ® 9003 | 75 | 500 | 1 | 1 200 | 300 |
| 28 | 70 | – | 30 | Elvax ® 4310 | 75 | 450 | 1 | 1 200 | 250 |
| 29 | 70 | – | 30 | Elvax ® 4355 | 75 | 480 | 1 | 1 300 | 250 |
| 30 | 70 | – | 30 | Levapren ® 450 P | 75 | 600 | 1 | 1 600 | 850 |
| 31 | 50 | – | 50 | Elvaloy ® | 75 | 400 | 1 | 800 | 200 |
| 32 | 50 | – | 50 | Pebax ® 2533 | 75 | 550 | 1 | 700 | 200 |
| 33 | 70 | – | 30 | Novodur ® A 50 | 75 | 450 | 2 | 1 800 | < 150 |

| Essais | Composition coextrudable | | | | Epaisseur de couche de composition μm | Resilience Kj/m² | Etalement 2 Excellent 1 Moyen 0 Mauvais | Adhesion à sec N/m | Adhesion en milieu humide N/m |
|---|---|---|---|---|---|---|---|---|---|
| | PPoids PMMA | P Poids PVDF | P Poids Elastomère | Elastomère | | | | | |
| 34 | 50 | – | 50 | Novodur® A 90 | 75 | 500 | 2 | 1 800 | < 100 |
| 35 | 50 | – | 50 | Blendex® 435 | 75 | 520 | 1 | 1 800 | 250 |
| 36 | 50 | – | 50 | Blendex® 310 | 75 | 550 | 1 | 1 600 | 200 |
| 37 | 40 | 30 | 30 | Aradur® T 723 | 75 | 500 | 2 | 1 550 | 150 |
| 38 | 35 | 30 | 35 | Estane® 58271 | 50 | 800 | 1 | > 2 550 | 50 |
| 39 | 35 | 30 | 35 | Metablen® C 201 | 50 | 750 | 2 | 1 960 | 1 800 |
| 40 | 35 | 30 | 35 | Lotader® | 50 | 750 | 1 | 900 | 720 |
| 41 | 70 | 30 | – | – | 50 | 350 | 2 | > 2 500 | > 2 500 |
| 42 | 70 | 30 | – | – | 50 | 400 | 2 | > 2 500 | > 2 500 |

| Essais | Composition coextrudable | | | | Epaisseur de couche de compo-sition µm | Resi-lience Kj/m² | Etalement 2 Excel-lent 1 Moyen O Mauvais | Adhesion à sec N/m | Adhesion en milieú humide N/m |
|---|---|---|---|---|---|---|---|---|---|
| | PPoids PMMA | P Poids PVDF | P Poids Elasto-mère | Elasto-mère | | | | | |
| 43 | 35 | 30 | 35 | Dura-strenght ® D 200 | 50 | 850 | 2 | > 2 500 | > 2 500 |
| 44 | 35 | 30 | 35 | Paraloïd ® EXL 2300 | 50 | 780 | 2 | > 2 500 | > 2 500 |
| 45 | 35 | 30 | 35 | Paraloïd ® KM 323 B | 50 | 900 | 2 | > 2 500 | > 2 500 |
| 46 | 35 | 30 | 35 | Paraloïd ® KM 323 B | 50 | 850 | 2 | > 2 000 | > 2 000 |
| 47 | 100 | - | - | - | 75 | 370 | 2 | > 2 500 | 480 |
| 48 | 35 | 30 | 35 | Dura-strenght ® D 200 | 50 | 980 | 2 | > 2 500 | > 2 500 |
| 49 | 35 | 30 | 35 | Estane ® 58300 | 50 | 800 | 1 | > 2 500 | 250 |

| Essais | Composition coextrudable | | | | Epaisseur de couche de composition μm | Resilience Kj/m² | Etalement 2 Excellent 1 Moyen O Mauvais | Adhesion à sec N/m | Adhesion en milieu humide N/m |
|---|---|---|---|---|---|---|---|---|---|
| | P Poids PMMA | P Poids PVDF | P Poids Elastomère | Elastomère | | | | | |
| 50 | 35 | 30 | 35 | Metablen® C 201 | 50 | 700 | 2 | 2 100 | 1 900 |
| 51 | 35 | 30 | 35 | Dura-strenght® D 200 | 50 à 70 | 950 | 2 | > 2 500 | > 2 500 |
| 52 | 30 | 35 | 35 | Dura-strenght® D 200 | 50 à 70 | 950 | 2 | > 2 500 | 2 100 |
| 53 | 25 | 35 | 40 | Dura-strenght® D 200 | 50 à 70 | 980 | 1 | 1 500 | 1 200 |

| Essais | Composition coextrudable | | | | Epaisseur de couche de composition μm | Resilience Kj/m² | Etalement 2 Excellent 1 Moyen 0 Mauvais | Adhesion à sec N/m | Adhesion en milieu humide N/m |
|---|---|---|---|---|---|---|---|---|---|
| | PPoids PMMA | P Poids PVDF | P Poids Elastomère | Elastomère | | | | | |
| 54 | 20 | 35 | 45 | Dura-strenght ® D 200 | 50 à 70 | - | 0 | - | - |
| 55 | 60 | 20 | 20 | Dura-strenght ® D 200 | 50 à 70 | 450 | 2 | > 2 500 | 1 200 |
| 56 | 30 | 60 | 10 | Dura-strenght ® D 200 | 50 à 70 | 620 | 2 | 1 000 | 900 |

EXEMPLE 2

Pour fabriquer un composite polycarbonate-PVDF on dispose de trois extrudeuses :
- une SAMAFOR monovis de 120 mm pour le polycarbonate (Macrolon ® 310)
- une ANDOUARD B30 pour la composition coextrudable

EP 0 450 994 B1

- une FAIREX B30 pour le PVDF (Foraflon ® 4000)

Une boîte de répartition de flux type KAUFMAN, une calandre à trois cylindres chauffés respectivement de haut en bas à 120°C, 140°C et 120°C, une filière SAMAFOR de 800 mm de largeur chauffée à 200-220°C complètent l'appareillage.

La compositon coextrudabte préparée dans les conditions de l'exemple 1 est constituée, de parties poids de :

35 PMMA (Resarit ® KOX 125)

30 PVDF (Foraflon ® 4000)

35 élastomère acrylique greffé (Paraloïd ® KM 323 B).

Les températures d'extrusion sont de 260-280°C pour le polycarbonate et de 240°C pour le PVDF et la composition, le répartiteur de flux étant à une température de 250°C. Dans le composite obtenu l'épaisseur de polycarbonate est de 3 mm celles de la composition et du PVDF étant respectivement de 100 μm et de 150 μm.

Les résultats d'examen de ce composite sont les suivants :

| Résilience | non mesurable : trop élevée |
|---|---|
| Adhésion avant vieillissement humide | > 2 500 N/m |
| Adhésion après vieillissement humide | > 2 500 N/m |
| Etalement | 2 |

EXEMPLE 3

On utilise deux extruseuses reliées à une filière classique permettant de coextruder et souffler une gaine ou un film.

Une extrudeuse FAIREX B30 contient le PVDF.

Une extrudeuse ANDOUART de diamètre 30 contient la couche d'adhésion.

Ces deux extrudeuses ainsi que la filière sont chauffées entre 200 et 220°C.

On fabrique deux films, l'un de composition suivante :

**A**

- PVDF (FORAFLON ® 4000 contenant 5 % d'oxyde de zinc et 5 % d'oxyde d'antimoine)
- couche d'adhésion : PMMA (ALTULITE ® 2654)

l'autre :

**B**

- PVDF (FORAFLON ® 4000 contenant 5 % d'oxyde de zinc et 5 % d'oxyde d'antimoine)
- couche d'adhésion de composition ci-après :

| PMMA (ALTULITE ® 2654) | 30 % en poids |
|---|---|
| Elastomère acrylique (DURASTRENGTH ® D200) | 35 |
| PVDF (FORAFLON ® 4000) | 35 |

Ces deux films **A** et **B** ont une épaisseur totale de 120 microns (70 microns de PVDF et 50 microns de composition d'adhésion).

On coule au moyen d'une machine à deux composants haute pression pour polyuréthanne simultanément :

133 parties en poids d'un prépolymère à base de diphényldiisocyanate et de dipropylèneglycol présentant 6,2 fonctions NCO libres par kg et

138,05 parties en poids d'un mélange contenant en parties en poids :

100 de polyoxypropylènetriol oxyéthylé d'indice d'OH = 28

2 de triméthylolpropane

30 de monoéthylèneglycol

2 de triéthylènediamine

0,05 de dibutyldilaurate d'étain

4 de chlorure de méthylène

La coulée de ce mélange s'effectue dans un moule porté à 75°C dans lequel on a placé soit le film **A**

16

soit le film **B** face PVDF contre la paroi du moule.

On obtient après 3 minutes une pièce moulée en mousse de polyuréthanne revêtue d'un film de PVDF **A** ou **B** fortement adhérent et de bel aspect.

On effectue sur les deux pièces **A** et **B** pour signifier qu'elles sont revêtues respectivement du film **A** et **B** un essai de choc qui consiste à laisser tomber d'une hauteur de 1 m un poids de 1,5 Kg.

La pièce **A** présente un décollement du film et un fendillement du film de PVDF à l'endroit du choc.

La pièce **B** conserve son aspect de surface.

Les deux échantillons **A** et **B** sont soumis à un test qui consiste à les laisser 400 heures dans une enceinte à 60°C et 100 % d'humidité. Après cette période on constate que le film de PVDF de l'échantillon **A** ne présente plus qu'une résistance au pelage de 400 N/m alors que sur l'échantillon **B** l'adhérence reste parfaite : > 2 500 N/m.

**Revendications**

1. Composition coextrudable avec le polyfluorure de vinylidène permettant de le faire adhérer aux résines polymériques qui lui sont incompatibles, ladite composition, à base de polyméthacrylate d'alcoyle et de polymère thermoplastique, est caractérisée en ce qu'elle est constituée de :

    27 à 50 parties en poids de polyméthacrylate d'alcoyle

    73 à 50 parties en poids d'un additif lui-même constitué pour 100 parties en poids d'additif de

    35 à 50 parties en poids de PVDF

    65 à 50 parties en poids d'élastomère acrylique ou méthacrylique.

2. Composition selon la revendication 1 caractérisée en ce que l'élastomère acrylique ou méthacrylique possède un allongement au seuil d'écoulement supérieur à 20 %.

3. Composition selon la revendication 1 ou 2 caractérisée en ce que l'élastomère acrylique ou méthacrylique greffé possède une température de transition vitreuse inférieure à -10°C.

4. Composition selon l'une des revendications 1 à 3 caractérisée en ce que l'élastomère acrylique ou méthacrylique est soit un élastomère acrylique greffé ou méthacrylique greffé, soit un élastomère à base de diène conjugué greffé par un composé acrylique et/ou méthacrylique.

5. Composition selon la revendication 4 caractérisée en ce que le diène conjugué est le butadiène.

6. Composition selon l'une des revendications 4 ou 5 caractérisée en ce que le diène est sous forme de copolymère avec le styrène.

7. Composition selon l'une des revendications 4 à 6 caractérisée en ce que l'élastomère acrylique ou méthacrylique est choisi parmi les esters alkylméthacrylique-butadiène-styrène, les esters alkylacrylique-butadiène-styrène, les copolymères greffés comprenant un tronc consistant en copolymère statistique d'un diène conjugué et d'un acrylate d'alcoyle en $C_2$-$C_{12}$ sur lequel sont greffés des chaines d'un copolymère de méthacrylate d'alcoyle en $C_1$-$C_4$ et/ou d'acrylate d'alcoyle en $C_1$-$C_8$.

8. Composition selon la revendications 4 caractérisée en ce que l'élastomère acrylique greffé ou méthacrylique greffé est un polyacrylate d'alcoyle ou polyméthacrylate d'alcoyle ou un de leurs copolymères greffé par un méthacrylate d'alcoyle ou un acrylate d'alcoyle sous forme de polymère ou de copolymère.

9. Composition selon la revendication 8 caractérisée en ce que l'élastomère acrylique ou méthacrylique greffé est un copolymère greffé comprenant un tronc consistant en polymère ou copolymère d'acrylate d'alcoyle ou méthacrylate d'alcoyle sur lequel sont greffées des chaines d'un polymère ou d'un copolymère d'acrylate d'alcoyle ou de méthacrylate d'alcoyle différent de celui du tronc.

10. Composition selon l'une des revendications 1 à 9 caractérisée en ce que l'élastomère acrylique ou méthacrylique possède un module d'élasticité en flexion inférieur ou égal à 800 MPa à la température ambiante.

11. Polyfluorure de vinylidène revêtue d'une couche de composition d'une des revendications 1 à 10.

**12.** Matériau composite polyfluorure de vinylidène-résine polymérique non compatible avec le polyfluorure de vinylidène caractérisé en ce que la composition d'une des revendications 1 à 10 sert d'intermédiaire d'adhérence.

**13.** Matériau composite selon la revendication 12 caractérisé en ce qu'on fait adhérer sur la résine polymérique non compatible le polyfluorure de vinylidène préalablement revêtu par coextrusion sur une de ses faces de la composition d'une des revendications 1 à 10.

**14.** Matériau composite selon la revendication 12 caractérisé en ce qu'il est obtenu par coextrusion du polyfluorure de vinylidène, de la composition d'une des revendications 1 à 10, et d'un polymère thermoplastique non compatible avec le polyfluorure de vinylidène, la composition servant d'intermédiaire d'adhérence.

**15.** Matériau composite selon l'une des revendications 12 à 14 caractérisé en ce que la résine polymérique non compatible avec le polyfluorure de vinylidène est un polymère thermoplastique choisi parmi le polychlorure de vinyle, le polychlorure de vinylidène, le polystyrène, le polystyrène choc, le polycarbonate, le polyuréthanne, le copolymère styrène-acrylonitrile-élastomère acrylique greffé, le copolymère acrylonitrile-butadiène-styrène ou un polymère thermodurcissable choisi parmi le polyuréthanne, le polyuréthanne-polyurée, les résines polyesters, les résines époxydes, les résines phénoliques ou les caoutchoucs vulcanisables.

**Claims**

**1.** Composition capable of being coextruded with polyvinylidene fluoride, enabling it to adhere to polymeric resins which are incompatible with it, the said composition, based on polyalkyl methacrylate and thermoplastic polymer, is characterized in that it consists of:
   27 to 50 parts by weight of polyalkyl methacrylate
   73 to 50 parts by weight of an additive, itself consisting, per 100 parts by weight of additive, of
   35 to 50 parts by weight of PVDF
   65 to 50 parts by weight of acrylic or methacrylic elastomer.

**2.** Composition according to Claim 1, characterized in that the acrylic or methacrylic elastomer has an elongation of more than 20 % at the yield point.

**3.** Composition according to Claim 1 or 2, characterized in that the grafted acrylic or methacrylic elastomer has a glass transition temperature below -10 °C.

**4.** Composition according to one of Claims 1 to 3, characterized in that the acrylic or methacrylic elastomer is either a grafted acrylic or grafted methacrylic elastomer or an elastomer based on a conjugated diene grafted with an acrylic and/or methacrylic compound.

**5.** Composition according to Claim 4, characterized in that the conjugated diene is butadiene.

**6.** Composition according to either of Claims 4 and 5, characterized in that the diene is in the form of a copolymer with styrene.

**7.** Composition according to one of Claims 4 to 6, characterized in that the acrylic or methacrylic elastomer is chosen from methacrylic alkyl esters/butadiene/styrene, acrylic alkyl esters/butadiene/styrene, graft copolymers comprising a backbone consisting of a random copolymer of a conjugated diene and of a $C_2$-$C_{12}$ alkyl acrylate onto which are grafted chains of a copolymer of $C_1$-$C_4$ alkyl methacrylate and/or $C_1$-$C_8$ alkyl acrylate.

**8.** Composition according to Claim 4, characterized in that the grafted acrylic or grafted methacrylic elastomer is a polyalkyl acrylate or polyalkyl methacrylate or one of their copolymers grafted with an alkyl methacrylate or an alkyl acrylate in polymer or copolymer form.

**9.** Composition according to Claim 8, characterized in that the grafted acrylic or methacrylic elastomer is a graft copolymer comprising a backbone consisting of alkyl acrylate or alkyl methacrylate polymer or copolymer onto which are grafted chains of an alkyl acrylate or alkyl methacrylate polymer or copolymer which is other than that of the backbone.

10. Composition according to one of Claims 1 to 9, characterized in that the acrylic or methacrylic elastomer has a flexural elasticity modulus lower than or equal to 800 MPa at room temperature.

11. Polyvinylidene fluoride coated with a layer of composition of one of Claims 1 to 10.

12. Polyvinylidene fluoride/polyvinylidene fluoride-incompatible polymeric resin composite material characterized in that the composition of one of Claims 1 to 10 is used as adhesiveness intermediate.

13. Composite material according to Claim 12, characterized in that polyvinylidene fluoride previously coated with the composition of one of Claims 1 to 10 by coextrusion onto one of its faces is made to adhere to the incompatible polymeric resin.

14. Composite material according to Claim 12, characterized in that it is obtained by coextrusion of polyvinylidene fluoride, of the composition of one of Claims 1 to 10 and of a thermoplastic polymer incompatible with polyvinylidene fluoride, the composition being used as adhesiveness intermediate.

15. Composite material according to one of Claims 12 to 14, characterized in that the polymeric resin incompatible with polyvinylidene fluoride is a thermoplastic polymer chosen from polyvinyl chloride, polyvinylidene chloride, polystyrene, impact polystyrene, polycarbonate, polyurethane, styrene/acrylonitrile/acrylic elastomer graft copolymer, acrylonitrile/butadiene/styrene copolymer or a thermosetting polymer chosen from polyurethane, polyurethane/polyurea, polyester resins, epoxy resins, phenolic resins and vulcanizable rubbers.

**Patentansprüche**

1. Mit Polyvinylidenfluorid coextrudierbare Zusammensetzung, die das Polyvinylidenfluorid an nicht kompatiblen Polymerharzen haften läßt; diese Zusammensetzung auf Basis eines Polyalkylmethacrylats und eines thermoplastischen Polymers ist dadurch gekennzeichnet, daß sie zusammengesetzt ist aus:
   27 bis 50 Gewichtsteilen eines Polyalkylmethacrylats
   73 bis 50 Gewichtsteilen eines Additives, welches bezogen auf 100 Gewichtsteile des Additives zusammengesetzt ist aus:
   35 bis 50 Gewichtsteilen PVDF
   65 bis 50 Gewichtsteilen eines Acryl- oder Methacrylelastomers.

2. Zusammensetzung nach Anspruch 1, dadurch gekennzeichnet, daß das Acryl- oder Methacrylelastomer eine Dehnung am Fließpunkt von mehr als 20 % besitzt.

3. Zusammensetzung nach Anspruch 1 oder 2, dadurch gekennzeichnet, daß das gepfropfte Acryl- oder Methacrylelastomer eine Glasübergangstemperatur unterhalb von -10 °C aufweist.

4. Zusammensetzung nach einem der Ansprüche 1 bis 3, dadurch gekennzeichnet, daß das Acryl- oder Methacrylelastomer entweder ein gepfropftes Acryl- oder ein gepfropftes Methacrylelastomer oder ein mit einer Acryl- und/oder Methacrylverbindung gepfropftes Elastomer auf Basis eines konjugierten Diens ist.

5. Zusammensetzung nach Anspruch 4, dadurch gekennzeichnet, daß das konjugierte Dien Butadien ist.

6. Zusammensetzung nach einem der Ansprüche 4 oder 5, dadurch gekennzeichnet, daß das Dien in Form eines Copolymers mit Styrol vorliegt.

7. Zusammensetzung nach einem der Ansprüche 4 bis 6, dadurch gekennzeichnet, daß das Acryl- oder Methacrylelastomer ausgewählt ist aus den Alkylmethacryl/Butadien/Styrol-Estern, den Alkylacryl/Butadien/Styrol-Estern,den gepfropften Copolymeren, die ein Grundgerüst aus einem statistischen Copolymer eines konjugierten Diens und eines $C_2$-$C_{12}$-Alkylacrylats enthalten, auf das Ketten eines Copolymers eines $C_1$-$C_4$-Alkylmethacrylats und/oder $C_1$-$C_8$-Alkylacrylats gepfropft sind.

19

8. Zusammensetzung nach Anspruch 4, dadurch gekennzeichnet, daß das gepfropfte Acrylelastomer oder das gepfropfte Methacrylelastomer ein Polyalkylacrylat oder ein Polyalkylmethacrylat oder eines ihrer Copolymere ist, welches mit einem Alkylmethacrylat oder einem Alkylacrylat in Form eines Polymers oder eines Copolymers gepfropft ist.

9. Zusammensetzung nach Anspruch 8, dadurch gekennzeichnet, daß das gepfropfte Acryl- oder Methacrylelastomer ein gepfropftes Copolymer ist, welches ein Grundgerüst aus einem Polymer oder Copolymer des Alkylacrylats oder des Alkylmethacrylats enthält, auf das Ketten eines Polymers oder eines Copolymers des Alkylacrylats oder des Alkylmethacrylats gepfropft sind, welches sich von dem des Grundgerüstes unterscheidet.

10. Zusammensetzung nach einem der Ansprüche 1 bis 9, dadurch gekennzeichnet, daß das Acryl- oder Methacrylelastomer ein Elastizitätsmodul beim Biegen von höchstens 800 MPa bei Raumtemperatur aufweist.

11. Polyvinylidenfluorid, bedeckt mit einer Schicht einer Zusammensetzung aus einem der Ansprüche 1 bis 10.

12. Verbundwerkstoff aus Polyvinylidenfluorid-Polymerharz, der nicht mit Polyvinylidenfluorid kompatibel ist, dadurch gekennzeichnet, daß er eine Zusammensetzung nach einem der Ansprüche 1 bis 10 als Haftungsvermittler enthält.

13. Verbundwerkstoff nach Anspruch 12, dadurch gekennzeichnet, daß auf dem nicht kompatiblen Polymerharz Polyvinylidenfluorid haftet, wobei letzteres zuvor durch Coextrusion auf einer Seite mit einer Zusammensetzung nach einem der Ansprüche 1 bis 10 beschichtet worden ist.

14. Verbundwerkstoff nach Anspruch 12, dadurch gekennzeichnet, daß er durch Coextrusion von Polyvinylidenfluorid, einer Zusammensetzung nach einem der Ansprüche 1 bis 10 und einem mit Polyvinylidenfluorid nicht kompatiblen thermoplastischen Polymer erhalten wird, wobei die Zusammensetzung als Haftungsvermittler dient.

15. Verbundwerkstoff nach einem der Ansprüche 12 bis 14, dadurch gekennzeichnet, daß das mit Polyvinylidenfluorid nicht kompatible Polymerharz ein thermoplastisches Polymer ist, ausgewählt aus Polyvinylchlorid, Polyvinylidenchlorid, Polystyrol, schlagzähem Polystyrol, Polycarbonat, Polyurethan, einem Copolymer aus Styrol, Acrylnitril und einem Pfropfacrylelastomer, einem Copolymer aus Acrylnitril, Butadien und einem Styrol oder dem hitzehärtbaren Polymer, ausgewählt aus Polyurethan, Polyurethan/ Polyharnstoff, den Polyesterharzen, den Epoxidharzen, den Phenolharzen oder den vulkanisierbaren Kautschuken.